# EUROPEAN PATENT SPECIFICATION

(11) **EP 3 667 535 B1**
(45) Date of publication and mention of the grant of the patent: **27.03.2024**
(21) Application number: 18842975.7
(22) Date of filing: 30.07.2018
(51) Int. Cl.: G06F 21/60, H04L 9/08, H04L 9/14, G06F 21/79

(54) **STORAGE DATA ENCRYPTION AND DECRYPTION DEVICE AND METHOD**
VORRICHTUNG UND VERFAHREN ZUR VERSCHLÜSSELUNG UND ENTSCHLÜSSELUNG VON SPEICHERDATEN
DISPOSITIF ET PROCÉDÉ DE CHIFFREMENT ET DE DÉCHIFFREMENT DE DONNÉES DE MÉMOIRE

(30) Priority: 08.08.2017 CN 201710671465
(43) Date of publication of application: 17.06.2020
(73) Proprietor: Alibaba Group Holding Limited, George Town, Grand Cayman (KY)
(72) Inventor: YANG, Jun, Hangzhou Zhejiang 310012 (CN); WANG, Jie, Hangzhou Zhejiang 310012 (CN)
(74) Representative: Finnegan Europe LLP
(86) International application number: PCT/CN2018/097717
(87) International publication number: WO 2019/029393

(56) References cited:
- CN-A- 104 918 243
- CN-A- 107 516 047
- CN-Y- 201 054 140
- US-A1- 2013 121 488
- US-A1- 2016 072 628

## Description

### Technical Field

The present invention relates to the field of computer device science and technologies, and in particular, to a storage data encryption and decryption apparatus and method.

### Background Art

With the acceleration of global informatization, networks and mobile Internet devices have been closely connected with people's life and become indispensable carriers of information exchange in the modern society. With the dramatic improvement of the performance of mobile smart devices and the ever-expanding coverage of the high-speed mobile Internet, mobile officing and mobile financial transactions have been carried out on a large scale. However, officing data and financial transaction data are facing increasingly more threats.

The computer technologies, the cryptography theories and the network application levels must be improved to solve the problem of data security. At present, information security protection has been developed from conventional single point information encryption to the construction of an information assurance system covering the whole network system on the basis of chip level hardware protection. In addition, the chip design with a low cost, a small volume, high performance, cracking-resistance, and an information security protection mechanism has become an inevitable trend. Thus, the chip design of a System on Chip (SoC) has gradually become a new development direction of an embedded system. Chip designers usually integrate encryption and decryption algorithms and information security protocols in a SoC chip and ensure adequate security levels. However, the SoC chip integrated encryption and decryption algorithms in the prior art encrypt and decrypt different chips or different storage areas of the same chip by using the same key, which cannot effectively protect data.

Therefore, it is urgent to design a storage data encryption and decryption apparatus and method, which can encrypt and decrypt data in different chips or different storage areas of the same chip by using different keys, thus implementing data storage, reading and writing operations more effectively.

US 2016/072628 A1 relates to systems and methods for managing cryptographic keys in a secure microcontroller. US 2013/121488 A1 relates to a method and storage device for protecting content.

### Summary of the Invention

A storage data encryption and decryption apparatus and method provided in the present invention can encrypt and decrypt data in different chips or different storage areas of the same chip by using different keys, so as to overcome the shortcomings in the prior art, thus implementing data storage, reading and writing operations efficiently.

In a first aspect, the present invention provides a storage data encryption and decryption method, including:
step 1: providing a true random number generator configured to generate a plurality of keys, wherein the plurality of keys comprises a first key and a second, different key;
step 2: providing a data memory configured to store data and a key memory configured to store keys, and writing the keys into the key memory; and
step 3: providing a data reading and writing interface module configured to read and write data, and providing a data encryption and decryption module configured to read the keys and perform encryption and decryption operations;
wherein the data written from the data reading and writing interface module is encrypted by the data encryption and decryption module and then written into the data memory, and the data read from the data memory is decrypted by the data encryption and decryption module and then read to the data reading and writing interface module,
wherein the method is performed by an embedded system comprising first and second chips,
wherein data in the first chip is encrypted and decrypted using the first key of the plurality of keys, and
wherein data in the second chip is encrypted and decrypted using the second, different key of the plurality of keys.

Optionally, the foregoing step 3 further includes judging whether to separate data in the data memory:
if the judgment result is yes, partitioning the data memory into a plurality of logical data storage areas, and performing encryption and decryption operations selectively on data of the plurality of data storage areas; and
if the judgment result is no, not partitioning the data memory into data storage areas, but performing encryption and decryption operations on data of an entire data storage area.

Optionally, keys of respective data storage areas used for selectively performing encryption and decryption operations on the data of the plurality of data storage areas are different from each other; and a unified key is used for performing encryption and decryption operations on the data of the entire data storage area.

Optionally, keys used for performing encryption and decryption operations on the same data storage area in the plurality of data storage areas of different chips are different from each other; and keys used for performing encryption and decryption operations on the data of the entire data storage area of different chips are different from each other.

Optionally, encryption and decryption algorithms used by the data encryption and decryption module are completed in a single cycle.

Optionally, the encryption and decryption algorithms used by the data encryption and decryption module include exclusive OR and sequence rearrangement.

Optionally, the data encryption and decryption module automatically acquires the keys in the key memory by hardware when a system chip is started.

Optionally, the data memory and the key memory are located on the same physical medium.

Optionally, the method further includes that the keys stored in the key memory can be cleared when the system is attacked.

In another aspect, the present invention provides a storage data encryption and decryption apparatus adapted to carry out the foregoing methods.

The storage data encryption and decryption apparatus and method provided in embodiments of the present invention can implement encryption of data in different chips or different storage areas of the same chip in a clock cycle, thus implementing data storage, reading and writing operations securely and efficiently.

### Brief Description of the Drawings

To illustrate the technical solutions in the embodiments of the present invention more clearly, the accompanying drawings for describing the embodiments are introduced briefly in the following. It is apparent that the accompanying drawings in the following description are only some embodiments of the present invention; those of ordinary skill in the art can obtain other drawings according to the accompanying drawings without creative efforts.
FIG. 1 is a schematic structural diagram of a storage data encryption and decryption apparatus according to an embodiment of the present invention;
FIG. 2 is a flowchart of storage data encryption and decryption according to an embodiment of the present invention; and
FIG. 3 is a schematic diagram of steps of a storage data encryption and decryption method according to an embodiment of the present invention.

### Detailed Description

In order to make the objectives, technical solutions and advantages of the embodiments of the present invention clearer, the technical solutions in the embodiments of the present invention will be clearly and completely described in the following with reference to the accompanying drawings in the embodiments of the present invention. It is apparent that the embodiments described are merely some of rather than all the embodiments of the present invention. Based on the embodiments in the present invention, all other embodiments obtained by those of ordinary skill in the art without creative efforts shall be encompassed in the protection scope of the present invention.

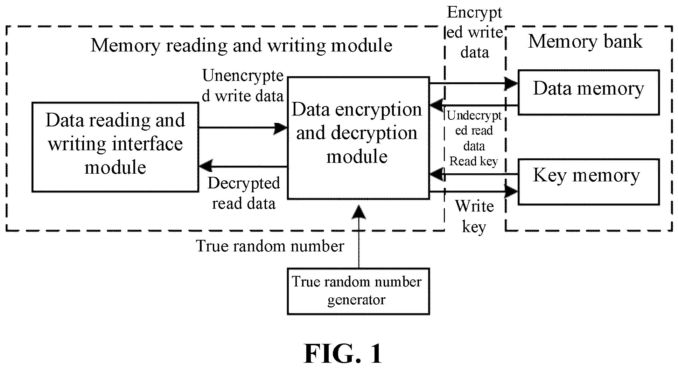

The present invention provides a storage data encryption and decryption apparatus. FIG. 1 is a schematic structural diagram of a storage data encryption and decryption apparatus according to an embodiment of the present invention. As shown in the drawing, the storage data encryption and decryption apparatus includes a memory module, a memory bank, and a true random number generator. Specifically, the memory module is configured to support data and key reading and writing and perform encryption and decryption operations on data passing through the module. The memory bank is configured to support a data and key storage function. The true random number generator is configured to generate keys.

A memory reading and writing module is responsible for encrypting write data and writing the encrypted write data into the memory bank, and decrypting read data that is read from the memory bank. The memory reading and writing module consists of a data reading and writing interface module and a data encryption and decryption module. The data reading and writing interface module is configured to read and write data. The data encryption and decryption module is configured to encrypt and decrypt the data.

Specifically, the data reading and writing interface module outputs unencrypted write data to the data encryption and decryption module, and inputs decrypted read data from the data encryption and decryption module.

In particular, the data encryption and decryption module can use single-cycle encryption and decryption algorithms. Such single-cycle encryption and decryption algorithms can include, but are not limited to, exclusive OR, sequence rearrangement, and the like. The data encryption and decryption module using such encryption and decryption algorithms does not affect the efficiency of data access.

The memory bank consists of a data memory and a key memory. The data memory is configured to store data. The key memory is configured to store keys. Typically, the data memory and the key memory are deployed, but are not limited to being deployed, on the same physical storage medium, thus facilitating efficient implementation of storage.

Specifically, the data in the data memory can be divided into a plurality of data storage areas. Different storage areas can perform encryption and decryption by using different keys. Each storage area can also select whether to perform encryption and decryption respectively. However, data in the same storage area only can be encrypted and decrypted by using the same key. In addition, keys used in the same data storage area of different chips are also different; and keys used for performing encryption and decryption operations on the data of the entire data storage area of different chips are different from each other. A plurality of keys are stored in the key memory, which are respectively used for performing encryption and decryption operations on data in a particular data storage area.

The true random number generator is responsible for generating keys that are provided for the data encryption and decryption module to perform encryption and decryption operations on data.

Specifically, the data encryption and decryption module in the memory reading and writing module outputs true random numbers generated by the true random number generator as keys into the key memory of the memory bank, encrypts write data output into the data memory by using the keys in the key memory, and decrypts input read data.

In particular, the data encryption and decryption module automatically acquires the keys in the key memory of the memory bank when a chip is started, and encrypts and decrypts, by using the acquired keys, all data passing through the memory reading and writing module. The manner of acquiring the keys is implemented by hardware, and is software-transparent.

In particular, the memory reading and writing module needs to be accessed after the data encryption and decryption module completes acquisition of the keys, and no response can be made to an advanced access request.

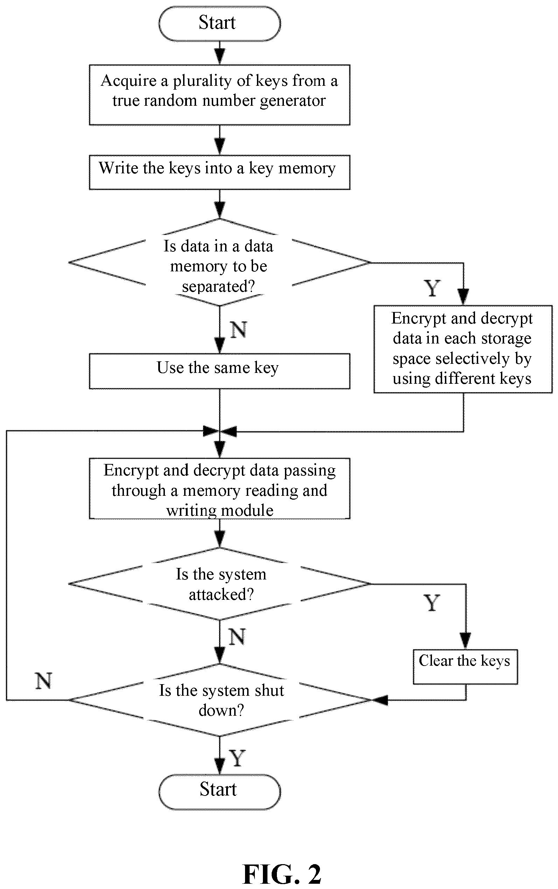

FIG. 2 is a flowchart of storage data encryption and decryption according to an embodiment of the present invention. As shown in the drawing, the system is started, a true random number generator generates a plurality of keys, and then a data encryption and decryption module writes the keys generated by the true random number generator into a key memory. It is judged whether to separate data in a data memory. If the judgment result is yes, the data memory is logically partitioned into a plurality of data storage areas, and encryption and decryption operations are performed selectively on data of each data storage area by using different keys. If the judgment result is no, the data memory is not partitioned into data storage areas, but data encryption and decryption are performed on an entire data storage area by using a unified key. Then, the data passing through the memory area reading and writing module is encrypted and decrypted. In an embodiment of the present invention, a data reading and writing interface module transmits unencrypted write data to the data encryption and decryption module, and the data encryption and decryption module encrypts the data and then stores the encrypted data into the data memory. On the contrary, the data memory transmits undecrypted read data to the data encryption and decryption module, and the data encryption and decryption module decrypts the undecrypted read data and transmits decrypted read data to the data reading and writing interface module. Then, it is judged whether the system is attacked. If the system is attacked, the data encryption and decryption module clears the keys in the key memory so as to avoid that the data in the memory is attacked and acquired. If the system is not attacked, it is then judged whether the system is shut down. If the judgment result is yes, the system is started. If the judgment result is no, the data passing through the memory reading and writing module is then encrypted and decrypted.

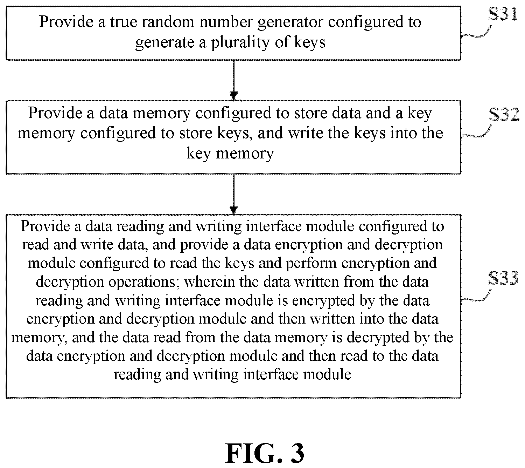

FIG. 3 is a schematic diagram of steps of a storage data encryption and decryption method according to an embodiment of the present invention. As shown in the drawing, in S31, a true random number generator configured to generate a plurality of keys is provided. In S32, a data memory configured to store data and a key memory configured to store keys are provided, and the keys are written into the key memory. In S33, a data reading and writing interface module configured to read and write data is provided, and a data encryption and decryption module configured to read the keys and perform encryption and decryption operations is provided; wherein the data written from the data reading and writing interface module is encrypted by the data encryption and decryption module and then written into the data memory, and the data read from the data memory is decrypted by the data encryption and decryption module and then read to the data reading and writing interface module.

According to the storage data encryption and decryption apparatus and method provided in the present invention, the data memory is partitioned into a plurality of storage areas in the same chip, each storage area uses a particular key respectively, and storage areas with the same address in different chips use different keys, which can ensure data security. In addition, when the system is subject to a data security attack, the keys in the key memory can be erased so that the encrypted data in the memory cannot be decrypted correctly and has a good anti-attack capability, and data storage, reading and writing operations can be implemented effectively.

The above descriptions are merely specific implementation manners of the present invention, but the protection scope of the present invention is not limited to this. Variations or replacements that can be easily thought of by any person skilled in the art within the technical scope disclosed in the present invention shall all be encompassed in the protection scope of the present invention. Therefore, the protection scope of the present invention should be subject to the protection scope of the claims.

## Claims

1. A storage data encryption and decryption method, comprising:
step 1: providing (S31) a true random number generator configured to generate a plurality of keys, wherein the plurality of keys comprises a first key and a second, different key;
step 2: providing (S32) a data memory configured to store data and a key memory configured to store keys, and writing the keys into the key memory; and
step 3: providing (S33) a data reading and writing interface module configured to read and write data, and providing a data encryption and decryption module configured to read the keys and perform encryption and decryption operations;
wherein the data written from the data reading and writing interface module is encrypted by the data encryption and decryption module and then written into the data memory, and the data read from the data memory is decrypted by the data encryption and decryption module and then read to the data reading and writing interface module,
wherein the method is performed by an embedded system comprising first and second chips,
wherein data in the first chip is configured to be encrypted and decrypted using the first key of the plurality of keys, and
wherein data in the second chip is configured to be encrypted and decrypted using the second, different key of the plurality of keys.

2. The method according to claim 1, wherein step 3 further comprises judging whether to separate data in the data memory:
if the judgment result is yes, partitioning the data memory into a plurality of logical data storage areas, and performing encryption and decryption operations selectively on data of the plurality of data storage areas; and
if the judgment result is no, not partitioning the data memory into data storage areas, but performing encryption and decryption operations on data of an entire data storage area.

3. The method according to claim 2, wherein keys of respective data storage areas used for selectively performing encryption and decryption operations on the data of the plurality of data storage areas are different from each other; and a unified key is used for performing encryption and decryption operations on the data of the entire data storage area.

4. The method according to claim 3, wherein keys used for performing encryption and decryption operations on the same data storage area in the plurality of data storage areas of different chips are different from each other; and keys used for performing encryption and decryption operations on the data of the entire data storage area of different chips are different from each other.

5. The method according to claim 1, wherein encryption and decryption algorithms used by the data encryption and decryption module are completed in a single cycle.

6. The method according to claim 5, wherein the encryption and decryption algorithms used by the data encryption and decryption module comprise exclusive OR and sequence rearrangement.

7. The method according to claim 1, wherein the data encryption and decryption module automatically acquires the keys in the key memory by hardware when a system chip is started.

8. The method according to claim 1, wherein the data memory and the key memory are located on the same physical medium.

9. The method according to claim 1, wherein the method further comprises that the keys stored in the key memory can be cleared when the system is attacked.

10. An apparatus adapted to carry out the method of any of the previous claims.

## Patentansprüche

1. Verfahren zur Verschlüsselung und Entschlüsselung von Speicherdaten, umfassend:
Schritt 1: Bereitstellen (S31) eines Generators echter Zufallszahlen, der dazu konfiguriert ist, eine Vielzahl von Schlüsseln zu generieren, wobei die Vielzahl von Schlüsseln einen ersten Schlüssel und einen zweiten, unterschiedlichen Schlüssel umfasst;
Schritt 2: Bereitstellen (S32) eines Datenspeichers, der dazu konfiguriert ist, Daten zu speichern, und eines Schlüsselspeichers, der dazu konfiguriert ist, Schlüssel zu speichern, und Schreiben der Schlüssel in den Schlüsselspeicher; und
Schritt 3: Bereitstellen (S33) eines Datenlese- und -schreibschnittstellenmoduls, das dazu konfiguriert ist, Daten zu lesen und zu schreiben, und Bereitstellen eines Datenverschlüsselungs- und -entschlüsselungsmoduls, das dazu konfiguriert ist, die Schlüssel zu lesen und Verschlüsselungs- und Entschlüsselungsvorgänge durchzuführen;
wobei die von dem Datenlese- und -schreibschnittstellenmodul geschriebenen Daten durch das Datenverschlüsselungs- und -entschlüsselungsmodul verschlüsselt und dann in den Datenspeicher geschrieben werden und die aus dem Datenspeicher gelesenen Daten durch das Datenverschlüsselungs- und -entschlüsselungsmodul entschlüsselt und dann in das Datenlese- und Schreibschnittstellenmodul eingelesen werden,
wobei das Verfahren von einem eingebetteten System durchgeführt wird, das einen ersten und zweiten Chip umfasst,
wobei Daten in dem ersten Chip dazu konfiguriert sind, unter Verwendung des ersten Schlüssels der Vielzahl von Schlüssel verschlüsselt und entschlüsselt werden, und
wobei Daten in dem zweiten Chip dazu konfiguriert sind, unter Verwendung des zweiten, unterschiedlichen Schlüssels der Vielzahl von Schlüsseln verschlüsselt und entschlüsselt zu werden.

2. Verfahren nach Anspruch 1, wobei Schritt 3 ferner Beurteilen, ob Daten in dem Datenspeicher zu trennen sind, umfasst:
wenn das Beurteilungsergebnis "Ja" lautet, Partitionieren des Datenspeichers in eine Vielzahl von logischen Datenspeicherbereichen und selektives Durchführen von Verschlüsselungs- und Entschlüsselungsvorgängen an Daten der Vielzahl von Datenspeicherbereichen; und
wenn das Beurteilungsergebnis "Nein" lautet, kein Partitionieren des Datenspeichers in Datenspeicherbereiche, sondern Durchführen von Verschlüsselungs- und Entschlüsselungsvorgängen an den Daten eines gesamten Datenspeicherbereichs.

3. Verfahren nach Anspruch 2, wobei sich die Schlüssel der jeweiligen Datenspeicherbereiche, die zum selektiven Durchführen von Verschlüsselungs- und Entschlüsselungsvorgängen an den Daten der Vielzahl von Datenspeicherbereichen verwendet werden, voneinander unterscheiden; und ein einheitlicher Schlüssel zum Durchführen der Verschlüsselungs- und Entschlüsselungsvorgänge an den Daten des gesamten Datenspeicherbereichs verwendet wird.

4. Verfahren nach Anspruch 3, wobei sich die Schlüssel, die zum Durchführen von Verschlüsselungs- und Entschlüsselungsvorgängen an demselben Datenspeicherbereich in der Vielzahl von Datenspeicherbereichen unterschiedlicher Chips verwendet werden, voneinander unterscheiden; und sich Schlüssel, die zum Durchführen von Verschlüsselungs- und Entschlüsselungsvorgängen an den Daten des gesamten Datenspeicherbereichs unterschiedlicher Chips verwendet werden, voneinander unterscheiden.

5. Verfahren nach Anspruch 1, wobei die von dem Datenverschlüsselungs- und - entschlüsselungsmodul verwendeten Verschlüsselungs- und Entschlüsselungsalgorithmen in einem einzigen Zyklus abgeschlossen werden.

6. Verfahren nach Anspruch 5, wobei die von dem Datenverschlüsselungs- und - entschlüsselungsmodul verwendeten Verschlüsselungs- und Entschlüsselungsalgorithmen Exklusiv-ODER und Sequenzumordnung umfassen.

7. Verfahren nach Anspruch 1, wobei das Datenverschlüsselungs- und - entschlüsselungsmodul beim Starten eines Systemchips automatisch die Schlüssel in dem Schlüsselspeicher per Hardware erfasst.

8. Verfahren nach Anspruch 1, wobei sich der Datenspeicher und der Schlüsselspeicher auf demselben physikalischen Medium befinden.

9. Verfahren nach Anspruch 1, wobei das Verfahren ferner umfasst, dass die auf dem Schlüsselspeicher gespeicherten Schlüssel bei einem Angriff auf das System gelöscht werden können.

10. Einrichtung, die zur Aufführung des Verfahrens nach einem der vorhergehenden Ansprüche angepasst ist.

## Revendications

1. Procédé de chiffrement et de déchiffrement de données de mémoire, comprenant :
étape 1 : fourniture (S31) d'un générateur de nombres vraiment aléatoires configuré pour générer une pluralité de clés, dans lequel la pluralité de clés comprennent une première clé et une deuxième clé différente ;
étape 2 : fourniture (S32) d'une mémoire de données configurée pour stocker des données et d'une mémoire de clés configurée pour stocker des clés, et écriture des clés dans la mémoire de clés ; et
étape 3 : fourniture (S33) d'un module d'interface de lecture et d'écriture de données configuré pour lire et écrire des données, et fourniture d'un module de chiffrement et de déchiffrement de données configuré pour lire les clés et exécuter des opérations de chiffrement et de déchiffrement ;
dans lequel les données écrites à partir du module d'interface de lecture et d'écriture de données sont chiffrées par le module de chiffrement et de déchiffrement de données, puis écrites dans la mémoire de données, et les données lues à partir de la mémoire de données sont déchiffrées par le module de chiffrement et de déchiffrement de données, puis lues dans le module d'interface de lecture et d'écriture de données,
dans lequel le procédé est exécuté par un système embarqué comprenant des première et seconde puces,
dans lequel les données dans la première puce sont configurées pour être chiffrées et déchiffrées à l'aide de la première clé de la pluralité de clés, et
dans lequel les données de la seconde puce sont configurées pour être chiffrées et déchiffrées à l'aide de la deuxième clé, différente, de la pluralité de clés.

2. Procédé selon la revendication 1, dans lequel l'étape 3 comprend en outre l'évaluation s'il faut séparer les données dans la mémoire de données :
si le résultat de l'évaluation est oui, le partitionnement de la mémoire de données en une pluralité de zones de stockage de données logiques, et l'exécution des opérations de chiffrement et de déchiffrement de manière sélective sur des données de la pluralité de zones de stockage de données ; et
si le résultat de l'évaluation est non, le non-partitionnement de la mémoire de données en zones de stockage de données, mais l'exécution des opérations de chiffrement et de déchiffrement sur les données de toute une zone de stockage de données.

3. Procédé selon la revendication 2, dans lequel les clés des zones de stockage de données respectives utilisées pour l'exécution sélective des opérations de chiffrement et de déchiffrement sur les données de la pluralité de zones de stockage de données sont différentes les unes des autres ; et une clé unifiée est utilisée pour l'exécution des opérations de chiffrement et de déchiffrement sur les données de toute la zone de stockage de données.

4. Procédé selon la revendication 3, dans lequel les clés utilisées pour l'exécution des opérations de chiffrement et de déchiffrement sur la même zone de stockage de données dans la pluralité de zones de stockage de données de différentes puces sont différentes les unes des autres ; et les clés utilisées pour l'exécution des opérations de chiffrement et de déchiffrement sur les données de toute la zone de stockage de données de différentes puces sont différentes les unes des autres.

5. Procédé selon la revendication 1, dans lequel les algorithmes de chiffrement et de déchiffrement utilisés par le module de chiffrement et de déchiffrement de données sont terminés en un seul cycle.

6. Procédé selon la revendication 5, dans lequel les algorithmes de chiffrement et de déchiffrement utilisés par le module de chiffrement et de déchiffrement de données comprennent un OU exclusif et un réarrangement de séquences.

7. Procédé selon la revendication 1, dans lequel le module de chiffrement et de déchiffrement de données acquiert automatiquement les clés dans la mémoire de clés par matériel lorsqu'une puce système est démarrée.

8. Procédé selon la revendication 1, dans lequel la mémoire de données et la mémoire de clés sont situées sur le même support physique.

9. Procédé selon la revendication 1, dans lequel le procédé comprend en outre le fait que les clés stockées dans la mémoire de clés peuvent être effacées lorsque le système est attaqué.

10. Appareil adapté pour mettre en oeuvre le procédé selon l'une quelconque des revendications précédentes.
